# EUROPÄISCHE PATENTSCHRIFT

(11) **EP 1 682 755 B1**
(45) Veröffentlichungstag und Bekanntmachung des Hinweises auf die Patenterteilung: **12.10.2011**
(21) Anmeldenummer: 04762662.7
(22) Anmeldetag: 14.08.2004
(51) Int. Cl.: F01N 3/023, F02B 37/16, F02B 39/10, F01N 11/00, F02B 37/013, F01N 3/30

(54) **VERFAHREN ZUM BETREIBEN EINER BRENNKRAFTMASCHINE**
METHOD FOR THE OPERATION OF AN INTERNAL COMBUSTION ENGINE
PROCEDE POUR FAIRE FONCTIONNER UN MOTEUR A COMBUSTION INTERNE

(30) Priorität: 29.10.2003 DE 10350485
(43) Veröffentlichungstag der Anmeldung: 26.07.2006
(73) Patentinhaber: ROBERT BOSCH GMBH, 70442 Stuttgart (DE)
(72) Erfinder: WIRTH, Ralf, 71229 Leonberg (DE); DUERNHOLZ, Manfred, 71720 Oberstenfeld (DE); KOERPERICH, Manfred, 71287 Weissach (DE)
(86) Internationale Anmeldenummer: PCT/DE2004/001817
(87) Internationale Veröffentlichungsnummer: WO 2005/045208

(56) Entgegenhaltungen:
- EP-A- 1 300 558
- WO-A-03/083272
- DE-A- 3 225 867
- DE-A- 10 028 608
- DE-A- 10 112 521
- DE-A- 10 127 392
- DE-A- 19 913 792
- FR-A- 2 840 643
- US-A1- 2002 166 547
- PATENT ABSTRACTS OF JAPAN Bd. 0102, Nr. 70 (M-517), 13. September 1986 (1986-09-13) & JP 61 093219 A (MITSUBISHI MOTORS CORP), 12. Mai 1986 (1986-05-12)
- PATENT ABSTRACTS OF JAPAN Bd. 0082, Nr. 67 (M-343), 7. Dezember 1984 (1984-12-07) & JP 59 138749 A (HINO JIDOSHA KOGYO KK), 9. August 1984 (1984-08-09)
- PATENT ABSTRACTS OF JAPAN Bd. 0102, Nr. 95 (M-523), 7. Oktober 1986 (1986-10-07) & JP 61 108822 A (NISSAN MOTOR CO LTD), 27. Mai 1986 (1986-05-27)

## Beschreibung

### Stand der Technik

Die Erfindung betrifft zunächst ein Verfahren zum Betreiben einer Brennkraftmaschine, bei dem im Abgas enthaltene Schadstoffe von einer Reinigungseinrichtung reduziert werden, welche mindestens zeitweise durch einen Oxidationsprozess regeneriert wird, und bei dem dann, wenn die Reinigungseinrichtung regeneriert wird oder regeneriert werden soll, wenigstens zeitweise Frischluft stromaufwärts von der Reinigungseinrichtung von einem Gebläse direkt in den Abgasstrom geleitet wird.

Die Erfindung betrifft auch ein Computerprogramm, ein elektrisches Speichermedium für eine Steuer- und/oder Regeleinrichtung, eine entsprechende Steuer- und/oder Regeleinrichtung sowie eine Brennkraftmaschine, insbesondere für ein Kraftfahrzeug, mit einer Reinigungseinrichtung, welche im Abgas enthaltene Schadstoff reduziert und welche mindestens zeitweise durch einen Oxidationsprozess regeneriert wird, und mit einem Gebläse, welches dann, wenn die Reinigungseinrichtung regeneriert wird oder regeneriert werden soll, wenigstens zeitweise Frischluft stromaufwärts von der Reinigungseinrichtung direkt in den Abgasstrom leitet.

Ein Verfahren der eingangs genannten Art ist aus der DE 101 62 383 A1 bekannt. Dort wird ein Abgassystem einer Dieselbrennkraftmaschine beschrieben, welches mehrere Katalysatoren und einen Partikelfilter aufweist. In einem Regenerationsbetrieb wird Kraftstoff in das Abgassystem eingeleitet und verbrannt. Durch die Verbrennung werden im Partikelfilter aufgefangene Rußpartikel oxidiert. Stromaufwärts von dem Partikelfilter ist eine Sekundärluftpumpe angebracht, mit der Luft in den Abgasstrom eingeblasen wird. Durch einen getakteten Betrieb dieser Sekundärluftpumpe soll ein oszillierender Lambdawert um den Wert 1 erreicht werden.

Aus der DE 101 58 569 A1 ist ebenfalls ein Abgassystem für eine Dieselbrennkraftmaschine bekannt, welche einen Partikelfilter aufweist, der durch Oxidation der eingelagerten Partikel regeneriert wird. Dabei müssen typischerweise Temperaturen von ungefähr 600 °C erreicht werden. Auch hier wird angedeutet, dass im Abgassystem ein zusätzlicher Dieselbrenner eingesetzt werden kann, und zwar gemeinsam mit einem Frischluftgebläse, um sicherzustellen, dass zu jedem Zeitpunkt eine ausreichende Sauerstoffmenge für die Verbrennung des Dieselkraftstoffes zur Verfügung steht.

DE 101 12 521 A1 beschreibt einen Automobilmotor, bei dem die Abgastemperatur und die Sauerstoffkonzentration im Abgas durch verschiedene Bypässe geregelt werden kann. JP 61 093219 A beschreibt eine Brennkraftmaschine mit Turbolader, bei der Ansaug- und Abgassystem über einen Bypass miteinander verbunden werden können. Ähnliches gilt für die WO 03/083272 A1.

Die vorliegende Erfindung hat die Aufgabe, ein Verfahren und eine Brennkraftmaschine der eingangs genannten Art so weiterzubilden, dass die Brennkraftmaschine möglichst preiswert ist und klein baut.

Diese Aufgabe wird durch ein Verfahren mit den Merkmalen des Anspruchs 1 sowie durch die in den nebengeordneten Patentansprüchen beanspruchten Geräte und Vorrichtungen gelöst.

### Vorteile der Erfindung

Erfindungsgemäß wird auf ein separates Gebläse zur Einbringung von Frischluft in den Abgasbereich verzichtet. Stattdessen wird ein in vielen Brennkraftmaschinen ohnehin vorhandener Lader, mit dem die Ansaugluft verdichtet und im Normalfall auf diese Weise eine höhere Luftfüllung in den Brennräumen der Brennkraftmaschine erzielt wird, für die Bereitstellung der in das Abgas einzubringenden Frischluft verwendet. Durch den Verzicht auf ein separates Gebläse werden die Herstellkosten der Brennkraftmaschine reduziert und es wird Bauraum gespart.

Die mit Hilfe des Laders während einer Regenerationsphase in das Abgas eingebrachte Frischluft kann beispielsweise dazu verwendet werden, mittels der erhöhten Sauerstoffkonzentration die exotherme Reaktion, welche zur Regenerierung der Reinigungseinrichtung erforderlich ist, zu verstärken. Hierdurch kann beispielsweise beim Abbrennen von Ruß in einem Partikelfilter die Regenerationsphase insgesamt verkürzt werden. Die durch die Regeneration bedingte Erhöhung des Kraftstoffverbrauchs würde damit weniger ins Gewicht fallen, da deren Zeitanteil insgesamt geringer wird.

Die in das Abgas eingeführte Frischluft kann aber auch dazu verwendet werden, die bei der Regeneration wegen der exothermen Reaktion entstehende Wärme schneller aus dem Abgassystem abzuführen und/oder auftretende Temperaturspitzen bei der exothermen Reaktion abzusenken. Hierdurch wird wiederum die Lebensdauer der Reinigungseinrichtung erhöht.

Ferner wird vorgeschlagen, dass das Gebläse elektrisch angetrieben wird (Elektrolader). Ein solcher Elektrolader dient im Normalfall dazu, bei niedrigen Drehzahlen der Brennkraftmaschine, bei denen ein von einer Abgasturbine angetriebener Lader prinzipbedingt keine ausreichende Leistung erbringen kann, die Ansaugluft zu komprimieren und so bereits bei niedrigen Drehzahlen eine hohe Luftfüllung und in der Folge ein hohes Drehmoment durch die Brennkraftmaschine bereitstellen zu können. Durch die einfache Schalt- und Steuerbarkeit eines Elektroladers kann der zusätzliche Luftbedarf, der während einer Regenerationsphase für die Einleitung von Frischluft in das Abgas benötigt wird, auf einfache Art und Weise eingestellt werden.

Vorteilhafte Weiterbildungen der Erfindung sind in Unteransprüchen angegeben.

Vorgeschlagen wird auch, dass Frischluft nur dann direkt in den Abgasstrom stromaufwärts von der Reinigungseinrichtung geleitet wird, wenn die Brennkraftmaschine höchstens mit einer bestimmten maximalen Last betrieben wird. Dem liegt die Überlegung zugrunde, dass bei niedriger Last der Brennkraftmaschine eine hohe Füllung in den Brennräumen der Brennkraftmaschine nicht erforderlich ist. Somit kann in einem solchen Betriebszustand die von dem Lader geförderte Luftmenge sehr gut in das Abgas eingeleitet und dort für die Regeneration der Reinigungseinrichtung verwendet werden, ohne dass die Leistung der Brennkraftmaschine hierdurch beeinträchtigt wird. Außerdem kann auf einen unnötig großen Lader, mit dem gleichzeitig eine in allen Betriebssituationen hohe Luftfüllung in den Brennräumen der Brennkraftmaschine und die für die Regenerierung der Reinigungseinrichtung erforderliche zusätzliche Frischluft bereitgestellt werden kann, verzichtet werden. Auch dies spart Kosten und Bauraum.

Besonders vorteilhaft ist dabei jene Weiterbildung des erfindungsgemäßen Verfahrens, bei welcher die Frischluft über den Strömungsweg einer Abgasrückführung in das Abgas gelangt. Eine solche Abgasrückführung ist ebenfalls ohnehin bei zahlreichen Brennkraftmaschinen vorhanden. Mit ihr wird in bestimmten Betriebssituationen der Brennkraftmaschine ein Teil des Abgases in den Ansaugbereich zurückgeführt, mit der Ansaugluft vermischt und den Brennräumen zugeführt. Dies dient hauptsächlich zur Reduzierung von Schadstoffemissionen.

Erfindungsgemäß wurde jedoch erkannt, dass bei niedriger Last einer mit einem Lader ausgerüsteten Brennkraftmaschine stromabwärts vom Lader im Ansaugbereich ein höherer Druck herrschen kann als im Abgas stromabwärts von den Brennräumen. Dieses Druckgefälle kann nun in diesen Betriebssituationen dazu verwendet werden, vom Lader verdichtete Frischluft entgegen der normalen Strömungsrichtung der Abgasrückführung in das Abgas einzuleiten. Dies kann beispielsweise über einen speziellen Abgasrückführkanal erfolgen, in dem ein entsprechendes Abgasrückführventil vorhanden ist (externe Abgasrückführung). Bei dieser Variante des erfindungsgemäßen Verfahrens können also ebenfalls ohnehin vorhandene Komponenten verwendet werden, was nochmals Kosten und Bauraum spart.

Vorgeschlagen wird auch, dass der Zeitpunkt und/oder die Dauer der Einleitung und/oder die Menge der in das Abgas geleiteten Frischluft von einer mindestens einer Betriebsgröße der Brennkraftmaschine abhängt. Dies gestattet eine optimale Anpassung der in das Abgas eingeleiteten Frischluftmenge an die aktuelle Betriebssituation der Brennkraftmaschine und somit einen sparsamen Einsatz des Laders.

In Weiterbildung hierzu wird vorgeschlagen, dass der Zeitpunkt und/oder die Dauer der Einleitung und/oder die Menge der in das Abgas eingeleiteten Frischluft von einer aktuellen Drehzahl einer Kurbelwelle und/oder einem aktuellen Drehmoment und/oder einer Luftfüllung eines Brennraums und/oder einer Abgastemperatur und/oder einer Temperatur der Reinigungseinrichtung abhängt. Diese Parameter werden bei üblichen Brennkraftmaschinen ohnehin erfasst und verarbeitet, so dass für deren Verwendung im Zusammenhang mit der Einleitung von Frischluft in das Abgas keine zusätzlichen Kosten aufzuwenden sind. Die angegebenen Betriebsgrößen gestatten jedoch eine sehr präzise Auswahl der für einen bestimmten Zustand der Brennkraftmaschine und/oder der Reinigungseinrichtung optimalen Einsatzstrategie des Laders.

### Zeichnungen

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Darstellung einer Brennkraftmaschine mit einem zusätzlichen elektrischen Lader in einem Ansaugbereich und mit einer Reinigungseinrichtung in einem Abgasbereich;
- Figur 2: ein Diagramm, in dem die durch die Reinigungseinrichtung strömende Gasmenge bei niedriger Last der Brennkraftmaschine bei aus- und eingeschaltetem Lader dargestellt ist; und
- Figur 3: ein Diagramm, in dem der Temperaturverlauf des durch die Reinigungseinrichtung strömenden Gases nach einer Leistungsreduzierung der Brennkraftmaschine mit aus- und eingeschaltetem Lader aufgetragen ist.

### Beschreibung des Ausführungsbeispiels

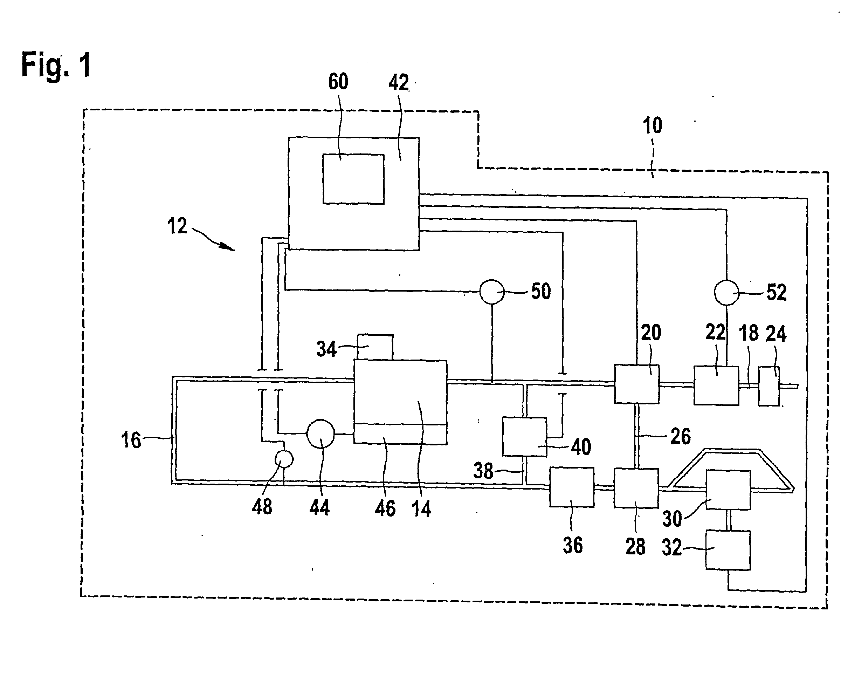

In Figur 1 trägt ein Kraftfahrzeug insgesamt das Bezugszeichen 10. Es ist in Figur 1 nur symbolisch durch eine gestrichelte Linie dargestellt. Das Kraftfahrzeug 10 wird von einer Brennkraftmaschine 12. angetrieben. Von dieser sind in Figur 1 nur die für die nachfolgende Beschreibung relevanten Komponenten und Bereiche dargestellt.

Die Brennkraftmaschine 12 umfasst mehrere Zylinder, von denen in Figur 1 nur einer gezeigt ist, welcher einen Brennraum 14 umfasst. In diesen gelangt die für den Betrieb erforderliche Luft über einen Einlasskanal 16. Die Verbrennungsabgase werden aus dem Brennraum 14 über ein Abgasrohr 18 abgeleitet. In diesem sind in Strömungsrichtung gesehen nacheinander eine Turbine 20, ein Katalysator 22, und ein Partikelfilter 24 angeordnet (in einigen Systemen kann auf einen Katalysator auch verzichtet werden)). Über eine mechanische Verbindung 26 treibt die Turbine 20 einen Verdichter 28 an. Dieser ist im Einlasskanal 16 angeordnet und wird auch als "Abgasturbolader" bezeichnet.

In einem Bypass (ohne Bezugszeichen) des Einlasskanals 16 ist ferner stromaufwärts vom Verdichter 28 ein zusätzlicher Verdichter 30 angeordnet, der von einem Elektromotor 32 angetrieben wird. Dieser Verdichter 30 wird daher auch als "Elektrolader" bezeichnet. Parallel zum zusätzlichen Verdichter 30 ist eine Rückschlagklappe (ohne Bezugszeichen) vorhanden, welche bei aktivem Elektrolader 30 geschlossen und bei deaktiviertem Elektrolader 30 geöffnet ist. Kraftstoff gelangt in den Brennraum 14 direkt mittels eines Injektors 34. Da das vorliegende Ausführungsbeispiel eine Diesel-Brennkraftmaschine zeigt, ist eine Zündkerze nicht vorhanden.

Im Einlasskanal 16 ist stromabwärts vom Turbolader 28 ein Ladeluftkühler 36 angeordnet. Stromabwärts von diesem zweigt ein Abgasrückführkanal 38 ab, der zwischen dem Brennraum 14 und der Turbine 20 in das Abgasrohr 18 mündet. Im Abgasrückführkanal 38 ist ein Abgasrückführventil 40 angeordnet.

Der Betrieb des Kraftfahrzeugs 10 und der Brennkraftmaschine 12 wird von einem Steuer- und Regelgerät 42 gesteuert bzw. geregelt. So steuert das Steuer- und Regelgerät 42 beispielsweise die Turbine 20 des Abgasturboladers 28 an, welche über eine variable Turbinengeometrie verfügt, über die die Leistung des Abgasturboladers 28 eingestellt werden kann. Alternativ oder zusätzlich ist auch der Einsatz eines "waste-gate" möglich. Ferner steuert das Steuer- und Regelgerät 42 den Elektromotor 32 des Elektroladers.

Die für die Steuerung bzw. Regelung des Kraftfahrzeugs 10 bzw. der Brennkraftmaschine 12 erforderlichen Eingangsgrößen erhält das Steuer- und Regelgerät 42 unter anderem von einem Drehzahlgeber 44, mit dem die Drehzahl einer Kurbelwelle 46 abgegriffen wird. Signale liefert auch ein Drucksensor 48, welcher den Druck (Gesamtladedruck) im Einlasskanal 16 zwischen dem Elektrolader 30 und dem Brennraum 14 erfasst. Ein Temperaturfühler 50 misst die Temperatur des Abgases im Abgasrohr 18 unmittelbar stromabwärts vom Brennraum 14, und ein weiterer Temperaturfühler 52 erfasst die aktuelle Betriebstemperatur des Katalysators 22.

Der Abgasturbolader 28 dient dazu, die Leistung der Brennkraftmaschine 12 durch eine Verdichtung der zur Verbrennung des Kraftstoff benötigten Luft und eine entsprechende Erhöhung der Luftfüllung im Brennraum 14 zu erhöhen. Der Abgasturbolader 28 weist jedoch den Nachteil eines verzögerten und unzureichenden Ansprechverhaltens bei kleinen Drehzahlen der Brennkraftmaschine 12 auf. Dies wird auch als "Turboloch" bezeichnet. Um dies zu vermeiden, ist der Elektrolader 30 vorgesehen. In einem unteren Drehzahlbereich der Kurbelwelle 46 der Brennkraftmaschine 12, in dem der Abgasturbolader 28 in einigen Betriebszuständen keine ausreichende Verdichtung der Verbrennungsluft herbeiführen kann, wird der Elektrolader 30 nach Bedarf, wenn beispielsweise bei niedriger Drehzahl ein hohes Drehmoment geleistet werden soll, zugeschaltet und angesteuert, um so die gewünschte Verdichtung bereit zu stellen.

Über den Abgasrückführkanal 38 kann in manchen Betriebszuständen der Brennkraftmaschine 12 Abgas aus dem Abgasrohr 18 in den Einlasskanal 16 geführt werden. Hierdurch soll vor allem die Verbrennungstemperatur und letztlich der Anteil schädlicher Stickoxide im Abgas gesenkt werden. Voraussetzung für eine derartige Abgasrückführung ist jedoch, dass im Einlasskanal 16 ein niedrigerer Druck herrscht als im Abgasrohr 18. In solchen Fällen wird das Abgasrückführventil 40 geöffnet, so dass Abgas aus dem Abgasrohr 18 in den Einlasskanal 16 strömen kann. In allen anderen Betriebszuständen wurde das Abgasrückführventil 40 bisher geschlossen, um einen Abfall des Drucks im Einlasskanal 16 zu verhindern.

Bei dem im Abgasrohr 18 angeordneten Katalysator 22 handelt es sich um einen Stickoxid-Speicherkatalysator. In diesem werden im Abgas enthaltene Stickoxide temporär eingespeichert. Besonders bei Diesel-Brennkraftmaschinen sind im Abgas außerdem Rußpartikel enthalten. Diese werden vom Partikelfilter 24 zurück gehalten. Der Stickoxid-Speicherkatalysator 22 und der Partikelfilter 24 stellen also eine Reinigungseinrichtung dar, und sie werden im Normalbetrieb der Brennkraftmaschine 12 immer mehr mit den entsprechenden Schadstoffen beladen. Um ihre Funktionsfähigkeit zu gewährleisten, müssen sie daher von Zeit zu Zeit "entladen" werden. Dies wird als "Regenerieren" bezeichnet.

Einige Regenerationsverfahren benötigen eine exotherme Reaktion welche zumeist die Verbrennung von Kraftstoff beinhaltet. Dieser liegt im Abgas entweder dadurch vor, dass speziell während einer solchen Regenerationsphase im Brennraum 14 ein sehr fettes Gemisch erzeugt wird, welches dort nicht vollständig verbrannt wird, oder es wird speziell für die Regenerationsphase zusätzlicher Kraftstoff direkt in das Abgasrohr 18 eingespritzt. Problematisch kann es jedoch sein, wenn eine derartige exotherme Regeneration bei einer vergleichsweise hohen Drehzahl der Kurbelwelle 46 und einem hohen Drehmoment (was einem hohen Abgas-Volumenstrom im Abgasrohr 18 entspricht) begonnen wird, und sich noch während der laufenden Regenerationsphase der Betriebspunkt der Brennkraftmaschine 12 hin zu einer deutlich niedrigeren Last ändert (beispielsweise Leerlauf). Hierdurch reduziert sich der Abgas-Volumenstrom deutlich. Da die begonnene exotherme Reaktion weiter abläuft, könnte es, ohne entsprechende Gegenmaßnahmen, zu einem thermischen Problem im Katalysator 22 und im Partikelfilter 24 kommen, da die bei der exothermen Reaktion entstehende Wärme aufgrund des nun niedrigen Abgas-Volumenstroms nicht schnell genug abgeführt werden kann.

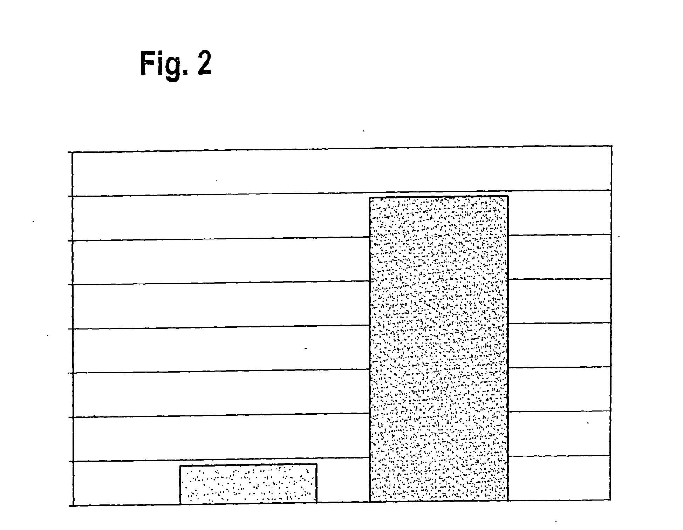

Um einen solchen Schaden zu verhindern, wird bei der in Figur 1 gezeigten Brennkraftmaschine 12 in einem solchen Betriebsfall, wenn also während laufender Regeneration die Drehzahl der Brennkraftmaschine 12 auf.Leerlaufniveau abfällt, der Elektrolader 30 in Betrieb genommen und das Abgasrückführventil 40 geöffnet. Da der Ladedruck im Einlasskanal 16 im Leerlauf der Brennkraftmaschine 12 höher ist als der Abgasdruck im Abgasrohr 18 unmittelbar stromabwärts vom Brennraum 14, wird vom Elektrolader 30 verdichtete Ansaugluft nun in erheblichem Umfange über den Abgasrückführkanal 38 in das Abgasrohr 18 eingeleitet. Hierdurch wird der Gasvolumenstrom, welcher durch das Abgasrohr 18 zum Katalysator 20 und weiter zum Partikelfilter 24 strömt, erheblich gesteigert. Dies ist auch aus Figur 2 ersichtlich: Der linke Balken zeigt den Gasvolumenstrom im Leerlauf der Brennkraftmaschine 12 bei ausgeschaltetem Elektrolader 30, der rechte Balken dagegen bei eingeschaltetem Elektrolader 30.

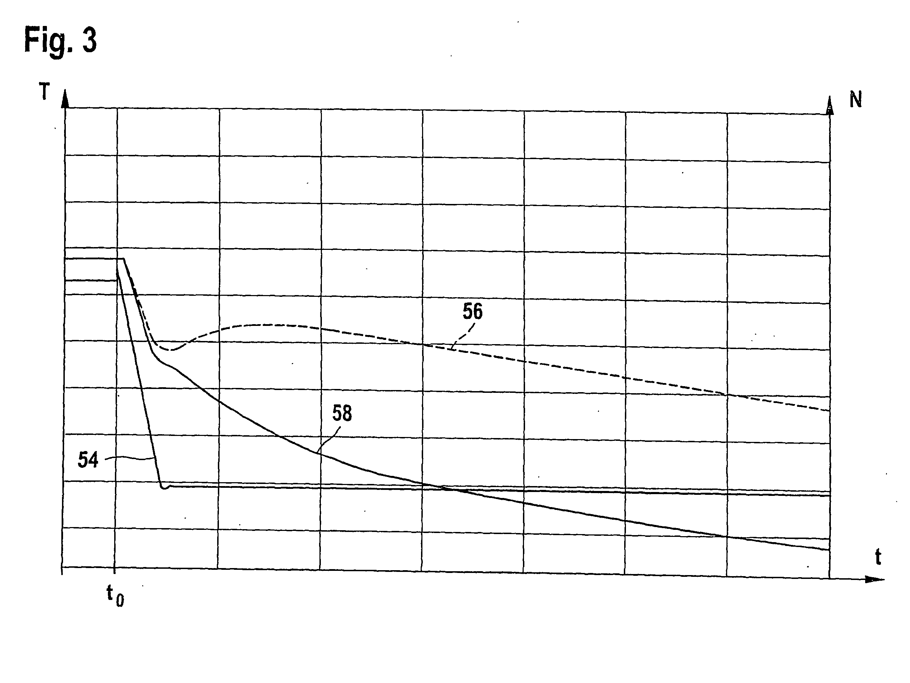

Durch den erhöhten Volumenstrom (Abgas + Frischluft) kann die bei der Regeneration entstehende Wärme sehr gut aus dem Abgassystem, insbesondere aus dem Katalysator 22 und dem Partikelfilter 24, abgeführt werden, und auftretende Temperaturspitzen bei der exothermen Reaktion können abgesenkt werden. Dies ist insbesondere auch aus Figur 3 ersichtlich: Mit 54 ist jene Kurve bezeichnet, welche den Verlauf einer Drehzahl N der Kurbelwelle 46 der Brennkraftmaschine über einer Zeit t darstellt. Das Bezugszeichen 56 kennzeichnet jene Kurve, welche den Temperaturverlauf des Abgases im Katalysator 22 ohne Zuschalten des Elektroladers 30 zeigt, und das Bezugszeichen 58 verweist auf jene Kurve, welche den Temperaturverlauf des Abgases im Katalysator 22 mit zugeschaltetem Elektrolader 30 zeigt.

Man erkennt sofort, dass nach dem Last- bzw. Drehzahlabfall der Brennkraftmaschine 12 zu einem Zeitpunkt t₀ die Temperatur mit eingeschaltetem Elektrolader 30 deutlich schneller abfällt als bei ausgeschaltetem Elektrolader 30. Durch ein Hinzuschalten des Elektroladers 30 kann die Regeneration des Katalysators 22 und des Partikelfilters 24 also fortgesetzt werden, ohne dass die Temperatur in diesen Komponenten so hoch steigt, dass Schäden entstehen können.

Dadurch, dass während der Regeneration des Katalysators 22 und des Partikelfilters 24 zusätzliche Frischluft in das Abgasrohr 18 eingeblasen wird, steht für die dort ablaufenden exothermen Reaktionen zusätzlicher Sauerstoff zur Verfügung. Hierdurch wird die exotherme Reaktion verstärkt, was die für die Regeneration des Katalysators 22 und des Partikelfilters 24 erforderliche Zeit verkürzt. Entsprechend wird auch der Zeitraum, während dem auf die eine oder andere Art und Weise zusätzlicher Kraftstoff in das Abgasrohr 18 eingebracht werden muss, verkürzt, was den Kraftstoffverbrauch der Brennkraftmaschine insgesamt reduziert.

Der Betrieb des Elektroladers 30 wird dabei vom Steuer- und Regelgerät 42 gesteuert bzw. geregelt. So wird beispielsweise Frischluft in das Abgasrohr 18 durch ein entsprechendes Öffnen des Abgasrückführventils 40 und eine Inbetriebnahme des Elektroladers 30 nur dann in das Abgasrohr 18 eingeblasen, wenn sich aus den Signalen des Drehzahlgebers 44 und des Drucksensors 48 ergibt, dass die Brennkraftmaschine mit geringer Last und niedriger Drehzahl betrieben wird. Außerdem wird das Einblasen von Frischluft in das Abgasrohr 18 nur dann zugelassen, wenn die Temperatur, die von den Temperaturfühlern 50 und 52 erfasst wird, oberhalb bestimmter Grenzwerte liegt. Die entsprechenden Betriebsverfahren sind in Form eines Computerprogramms auf einem Speicher 60 des Steuer- und Regelgeräts 42 abgespeichert.

## Patentansprüche

1. Verfahren zum Betreiben einer Brennkraftmaschine (12), bei dem im Abgas enthaltene Schadstoffe von einer Reinigungseinrichtung (22, 24) reduziert werden, welche mindestens zeitweise durch einen Oxidationsprozess regeneriert wird, und bei dem dann, wenn die Reinigungseinrichtung (22, 24) regeneriert wird oder regeneriert werden soll, wenigstens zeitweise Frischluft stromaufwärts von der Reinigungseinrichtung (22, 24) von einem Gebläse (30) direkt in den Abgasstrom geleitet wird, wobei als Frischluft Ansaugluft der Brennkraftmaschine (12) verwendet wird, welche von einem im Ansaugbereich (16) angeordneten Gebläse (Lader) (30) verdichtet und zumindest zum Teil direkt in den Abgasstrom geleitet wird, **dadurch gekennzeichnet, dass** das Gebläse (30) elektrisch angetrieben wird und als Elektrolader im Normal Fall dazu dient, bei niedrigen Drehzahlen der Brennkraftmaschine die Ansaugluft zu komprimieren.

2. Verfahren nach Anspruch 1, **dadurch gekennzeichnet, dass** Frischluft nur dann direkt in den Abgasstrom stromaufwärts von der Reinigungseinrichtung (22, 24) geleitet wird, wenn die Brennkraftmaschine (12) höchstens mit einer bestimmten maximalen Last betrieben wird.

3. Verfahren nach Anspruch 2, **dadurch gekennzeichnet, dass** die Frischluft über den Strömungsweg (38) einer Abgasrückführung in das Abgas gelangt.

4. Verfahren nach einem der vorhergehenden Ansprüche, **dadurch gekennzeichnet, dass** der Zeitpunkt und/oder die Dauer der Einleitung und/oder die Menge der in das Abgas eingeleiteten Frischluft von mindestens einer Betriebsgröße der Brennkraftmaschine (12) abhängt.

5. Verfahren nach Anspruch 4, **dadurch gekennzeichnet, dass** der Zeitpunkt und/oder die Dauer der Einleitung und/oder die Menge der in das Abgas eingeleiteten Frischluft von einer aktuellen Drehzahl einer Kurbelwelle (46) und/oder einem aktuellen Drehmoment und/oder einer Luftfüllung eines Brennraums (14) und/oder einer Abgastemperatur und/oder einer Temperatur der Reinigungseinrichtung (22) abhängt.

6. Computerprogramm, **dadurch gekennzeichnet, dass** es zur Anwendung in einem Verfahren nach einem der vorhergehenden Ansprüche programmiert ist.

7. Elektrisches Speichermedium (60) für eine Steuer- und/oder Regeleinrichtung (42) einer Brennkraftmaschine (12), **dadurch gekennzeichnet, dass** auf ihm ein Computerprogramm zur Anwendung in einem Verfahren der Ansprüche 1 bis 5 abgespeichert ist.

8. Steuer- und/oder Regeleinrichtung (42) für eine Brennkraftmaschine (12), **dadurch gekennzeichnet, dass** sie zur Anwendung in einem Verfahren nach einem der Ansprüche 1 bis 5 programmiert ist.

9. Brennkraftmaschine (12), insbesondere für ein Kraftfahrzeug, mit einer Reinigungseinrichtung (22, 24), welche im Abgas enthaltene Schadstoffe reduziert und welche mindestens zeitweise durch einen Oxidationsprozess regeneriert wird, und mit einem Gebläse (30), welches dann, wenn die Reinigungseinrichtung (22, 24) regeneriert wird oder regeneriert werden soll, wenigstens zeitweise Frischluft stromaufwärts von der Reinigungseinrichtung (22, 24) direkt in den Abgasstrom leitet, **dadurch gekennzeichnet, dass** das Gebläse ein im Ansaugbereich (16) angeordnetes elektrisches Gebläse (Elektrolader) (30) ist, welches die Ansaugluft verdichtet, und wobei sie eine Steuer- und/oder Regeleinrichtung (42) umfasst, welche zur Anwendung in einem Verfahren nach einem der Ansprüche 1 bis 5 programmiert ist.

## Claims

1. Method for operating an internal combustion engine (12), in which method pollutants contained in the exhaust gas are reduced by a purification device (22, 24) which is regenerated at least intermittently by means of an oxidation process, and in which method, when the purification device (22, 24) is regenerated or is to be regenerated, fresh air is at least intermittently conducted directly into the exhaust-gas flow upstream of the purification device (22, 24) by a blower (30), wherein as fresh air, intake air of the internal combustion engine (12) is used which is compressed, and at least partially conducted directly into the exhaust-gas flow, by a blower (charger) (30) arranged in the intake region (16), **characterized in that** the blower (30) is driven electrically and, as an electric charger, serves normally to compress the intake air at low rotational speeds of the internal combustion engine.

2. Method according to Claim 1, **characterized in that** fresh air is conducted directly into the exhaust-gas flow upstream of the purification device (22, 24) only when the internal combustion engine (12) is being operated at most at a certain maximum load.

3. Method according to Claim 2, **characterized in that** the fresh air passes via the flow path (38) of an exhaust-gas recirculation means into the exhaust gas.

4. Method according to one of the preceding claims, **characterized in that** the time and/or the duration of introduction and/or the amount of fresh air introduced into the exhaust gas is dependent on at least one operating variable of the internal combustion engine (12).

5. Method according to Claim 4, **characterized in that** the time and/or the duration of introduction and/or the amount of fresh air introduced into the exhaust gas is dependent on a present rotational speed of a crankshaft (46) and/or a present torque and/or an air charge of a combustion chamber (14) and/or an exhaust-gas temperature and/or a temperature of the purification device (22).

6. Computer program, **characterized in that** it is programmed for use in a method according to one of the preceding claims.

7. Electric storage medium (60) for a control and/or regulating device (42) of an internal combustion engine (12), **characterized in that** a computer program for use in a method of Claims 1 to 5 is stored on said electric storage medium.

8. Control and/or regulating device (42) for an internal combustion engine (12), **characterized in that** said control and/or regulating device is programmed for use in a method according to one of Claims 1 to 5.

9. Internal combustion engine (12), in particular for a motor vehicle, having a purification device (22, 24) which reduces pollutants contained in the exhaust gas and which is regenerated at least intermittently by an oxidation process, and having a blower (30) which, when the purification device (22, 24) is regenerated or is to be regenerated, at least intermittently conducts fresh air directly into the exhaust-gas flow upstream of the purification device (22, 24), **characterized in that** the blower is an electric blower (electric charger) (30) which is arranged in the intake region (16) and which compresses the intake air, said internal combustion engine comprising a control and/or regulating device (42) which is programmed for use in a method according to one of Claims 1 to 5.

## Revendications

1. Procédé pour faire fonctionner un moteur à combustion interne (12), dans lequel les substances polluantes contenues dans le gaz d'échappement sont réduites par un dispositif de purification (22, 24), qui est régénéré au moins temporairement par un processus d'oxydation, et dans lequel, lorsque le dispositif de purification (22, 24) est régénéré ou doit être régénéré, de l'air frais est guidé au moins temporairement vers l'amont depuis le dispositif de purification (22, 24) par une soufflante (30) directement dans le flux de gaz d'échappement, de l'air d'admission du moteur à combustion interne (12) étant utilisé comme air frais, qui est comprimé par une soufflante (surcompresseur) (30) disposée dans la zone d'admission (16), et est guidé au moins en partie directement dans le flux de gaz d'échappement, **caractérisé en ce que** la soufflante (30) est entraînée électriquement et, en tant que surcompresseur électrique, sert en temps normal à comprimer l'air d'admission à bas régimes du moteur à combustion interne.

2. Procédé selon la revendication 1, **caractérisé en ce que** l'air frais est seulement guidé directement dans le flux de gaz d'échappement vers l'amont depuis le dispositif de purification (22, 24) lorsque le moteur à combustion interne (12) est entraîné au maximum avec une charge maximale déterminée.

3. Procédé selon la revendication 2, **caractérisé en ce que** l'air frais parvient dans le gaz d'échappement par le biais de la voie d'écoulement (38) d'une recirculation des gaz d'échappement.

4. Procédé selon l'une quelconque des revendications précédentes, **caractérisé en ce que** l'instant et/ou la durée de l'introduction et/ou la quantité de l'air frais introduit dans le gaz d'échappement dépend d'au moins une grandeur de fonctionnement du moteur à combustion interne (12).

5. Procédé selon la revendication 4, **caractérisé en ce que** l'instant et/ou la durée de l'introduction et/ou la quantité de l'air frais introduit dans le gaz d'échappement dépend d'une vitesse de rotation actuelle d'un vilebrequin (46) et/ou d'un couple actuel et/ou d'un remplissage d'air d'une chambre de combustion (14) et/ou d'une température des gaz d'échappement et/ou d'une température du dispositif de purification (22).

6. Programme informatique, **caractérisé en ce qu'**il est programmé pour l'utilisation dans un procédé selon l'une quelconque des revendications précédentes.

7. Support de mémoire électrique (60) pour un dispositif de commande et/ou de régulation (42) d'un moteur à combustion interne (12), **caractérisé en ce qu'**il mémorise un programme informatique pour l'utilisation dans un procédé selon l'une quelconque des revendications 1 à 5.

8. Dispositif de commande et/ou de régulation (42) pour un moteur à combustion interne (12), **caractérisé en ce qu'**il est programmé pour l'utilisation dans un procédé selon l'une quelconque des revendications 1 à 5.

9. Moteur à combustion interne (12), notamment pour un véhicule automobile, comprenant un dispositif de purification (22, 24), qui réduit les substances polluantes contenues dans le gaz d'échappement, et qui est régénéré au moins temporairement par un processus d'oxydation, et comprenant une soufflante (30) qui, lorsque le dispositif de purification (22, 24) est régénéré ou doit être régénéré, guide au moins temporairement de l'air frais vers l'amont depuis le dispositif de purification (22, 24) directement dans le flux de gaz d'échappement, **caractérisé en ce que** la soufflante est une soufflante électrique (surcompresseur électrique) (30) disposée dans la région d'admission (16), qui comprime l'air d'admission, et comprenant un dispositif de commande et/ou de régulation (42) qui est programmé pour l'utilisation dans un procédé selon l'une quelconque des revendications 1 à 5.
